(19) Europäisches Patentamt
European Patent Office
Office européen des brevets

(11) **EP 1 142 913 A1**

(12) **DEMANDE DE BREVET EUROPEEN**

(43) Date de publication:
**10.10.2001 Bulletin 2001/41**

(51) Int Cl.[7]: **C08F 4/00**, C08F 293/00, C08F 2/38

(21) Numéro de dépôt: **01106802.0**

(22) Date de dépôt: **19.03.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **07.04.2000 FR 0004557**

(71) Demandeur: **Atofina**
**92800 Puteaux (FR)**

(72) Inventeurs:
- **Guerret, Olivier**
  **69280 Marcy L'etoile (FR)**
- **Robin, Sophie**
  **Rue Frédéric Sevene, 33400 Talence (FR)**
- **Gnanou, Yves**
  **33400 Talence (FR)**

(54) **Polymères multimodaux par polymérisation radicalaire contrôlée en présence d'alcoxyamines**

(57) L'invention concerne un procédé de préparation d'un polymère multimodal par polymérisation radicalaire d'au moins un monomère en présence de plusieurs alcoxyamines comprenant l'enchaînement de formule

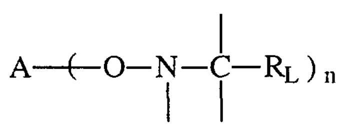

(1)

dans laquelle $R_L$ est un radical monovalent présentant une masse molaire supérieure à 15, A représente le coeur de l'alcoxyamine, n est un nombre entier non nul, lesdites alcoxyamines présentant des valeurs de n différents.

EP 1 142 913 A1

## Description

L'invention concerne un procédé de préparation de polymères à la distribution des masses moléculaires multimodales ("polymère multimodal") par polymérisation radicalaire contrôlée.

Une distribution des masses moléculaires est dite multimodale lorsqu'elle comprend plusieurs groupes de molécules de masse moléculaire moyenne différentes. Ceci peut se traduire par l'existence d'un simple épaulement sur le flan du pic principal, ou, par l'existence de plusieurs maxima dans la courbe obtenue par chromatographie à perméation de gel (GPC).

Un polymère contenant deux groupes de molécules de masses moléculaires moyenne différentes est dit bimodal (polymère "bimodal"). Un polymère contenant trois groupes de molécules de masse moléculaire moyenne différentes est dit trimodal (polymère "trimodal").

La fabrication de polymères multimodaux est un enjeu essentiel dans le domaine des matériaux car ce genre de polymères permet d'associer dans un même matériau les propriétés de chaque groupe de molécules dont il est constitué. Par exemple, des polymères de haute masse apportent une bonne tenue mécanique tandis que les faibles masses permettent de conserver une bonne fluidité à haute température au matériau ce qui facilite sa mise en oeuvre.

Notamment, des techniques de préparation de polymères bimodaux sont recherchées. En effet, la préparation de tels polymères est utile car ces polymères présentent généralement à la fois d'une part des propriétés mécaniques élevées, notamment la résistance aux chocs (mesurée par le test IZOD et/ou CHARPY, respectivement normes ISO 180 et ISO 179) ainsi qu'une meilleure tenue aux hautes températures, ce qui se traduit par un point Vicat élevé et une plus haute température de distorsion sous charge ("heat deflection temperature" ou "HDT" en anglais) (Vicat: norme ISO 306, HDT: ISO 75), lesdites propriétés mécaniques élevées ayant surtout pour origine la population de hautes masses moléculaires, et d'autre part sont faciles à mettre en oeuvre, notamment par des technologies de transformation connues de l'homme du métier (extrusion, injection, moulage par compression transfert, thermoformage) en raison ici de la présence de la population de faibles masses moléculaires, cette dernière jouant en fait le rôle de plastifiant.

Dans le domaine de la polymérisation radicalaire, une technique connue de fabrication de tels polymères consiste à faire deux polymérisations successives : la première polymérisation produit les polymères de faible masse qui servent de milieu réactionnel pour la fabrication de la seconde famille de polymères de haute masse (voir EP 905153 ; EP 905151 ; EP 881237). L'inconvénient d'une telle technique est qu'il est nécessaire de posséder deux réacteurs « en cascade » ce qui implique un investissement important. Une autre technique consiste à mélanger en fusion deux résines mais le choix des mélanges est limité par la miscibilité des résines. Enfin, une troisième technique consiste à greffer partiellement sur un polymère un autre type de polymère ce qui exige là encore un procédé multi-étapes.

Le EP 905 151 décrit une technique d'obtention de polyéthylène bimodal. Le US 5,723,554 (de même famille que le GB 2304721) décrit la préparation de polystyrène à la polydispersité étroite par polymérisation du styrène en présence de radicaux stables de type nitroxyle et en présence de divinylbenzène.

Dans Polymer Preprints, vol 40, N°2, page 366, Août 1999 (Chaumont et coll), la réticulation de polymères par un agent de couplage afin d'obtenir des réseaux et des gels est décrite.

Les brevets US 5627248, US 5498679 et US 4581429 décrivent l'emploi d'une polyalcoxyamine pour la synthèse de polymères par polymérisation controlée par des nitroxides. Ces trois brevets ne décrivent l'emploi que d'une polyalcoxyamine à la fois. Dans ces documents, la base commune de 1' alcoxyamine est le radical TEMPO. Ces brevets concernent essentiellement la polymérisation radicalaire contrôlée du styrène et de ses dérivés puisque 1' alcoxyamine utilisée n'est pas apte à la polymérisation d'autres types de monomère. Dans US 5627248, des composés mixtes alcoxyamine-azo sont décrits, mais il n'est pas fait mention dans ce document de l'emploi de mélange d'alcoxyamine et d'initiateurs classiques peroxydes ou azoïques.

Les documents suivants peuvent encore être cités: US 4581429, WO 9624620, la demande de brevet français n° 9900127, la demande de brevet français n° 99 06329, la demande de brevet français n° 9904405, la demande de brevet français n° 99 01998, la demande de brevet français n° 98 12477 (publiée sous le n° FR 2784111), T. Fukuda et al. Macromolecules, 1996, 29, 6393.

L'invention permet la fabrication de polymères multimodaux en une seule étape, grâce à l'utilisation d'alcoxyamines spécifiques. Chaque groupe de molécules de polymère est obtenu de manière contrôlée ce qui signifie que chaque pic de la distribution de masse peut être très fin et que les rapports entre les masses de chaque famille sont contrôlés. La technique est particulièrement adaptée à la réalisation de copolymères à blocs.

Le procédé selon l'invention est un procédé de polymérisation radicalaire contrôlée. Une polymérisation radicalaire est d'autant mieux contrôlée que la courbe représentant l'évolution de la masse moléculaire moyenne en nombre (Mn) en fonction de la conversion de monomère en polymère se rapproche de la linéarité. De même, une polymérisation radicalaire est d'autant mieux contrôlée que la courbe représentant l'évolution du logarithme népérien du rapport M°/M (M° représentant la concentration initiale de monomère et M représentant la concentration de monomère à un instant donné au cours de la polymérisation) en fonction du temps, se rapproche de la linéarité.

C'est grâce au fait qu'un procédé de polymérisation radicalaire est contrôlé par exemple par un radical libre stable que ledit procédé permet la réalisation de polymères à blocs par introduction successive de différents monomères dans le milieu de polymérisation. En effet, grâce à un tel procédé, le polymère en formation est un polymère vivant.

Le procédé selon l'invention permet de préparer des polymères multimodaux bien contrôlés en terme de rapport des masses des différentes populations et en terme de précision des longueurs de chaînes et ce, par un procédé très simple faisant appel aux technologies classiques de polymérisation utilisées pour un polymère monomodal (une seule population de molécules). En outre, le caractère vivant de la polymérisation permet de préparer des copolymères multimodaux. Dans un réacteur classique on obtient donc des produits mieux définis et plus variés que par les procédés de l'art antérieur, et ce, avec une cinétique mieux définie.

Selon l'art antérieur, les radicaux stables utilisés sont pricipalement de la famille du 2,2,6,6-tétraméthyl-1-piperidinyloxy (communément appelé "TEMPO"), lequel peut être représenté par:

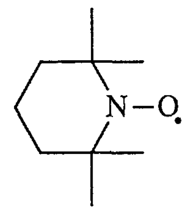

Les alcoxyamines dérivées du Tempo, et donc du type :

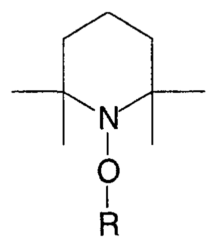

dans laquelle R représente par exemple un radical alkyle, sont capables d'amorcer et de contrôler des polymérisations. Cependant, la cinétique de ces polymérisations n'est pas fonction de la concentration initiale en alcoxyamines. Ainsi, dans de tels systèmes, travailler avec deux fois plus d'initiateur ne permet pas de multiplier par deux la conversion en fonction du temps. Dans ce cas, l'utilisation d'une dialcoxyamine telle que :

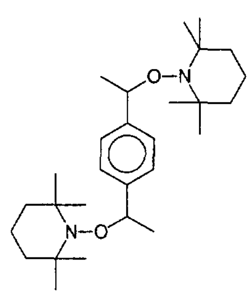

fournit la même courbe de conversion en fonction du temps que celle obtenue avec une monoalcoxyamine telle que :

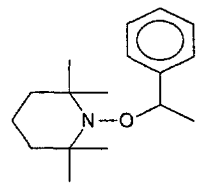

Il est probable que l'importance trop forte de l'initiation thermique dans ces systèmes soit à l'origine de cet effet.

L'importance d'utiliser des alcoxyamines dont la concentration initiale est directement reliée à la cinétique de conversion est donc grande car elle permet d'obtenir un polymère de masse moléculaire moyenne en poids de 100.000 g/mol à partir d'une dialcoxyamine en un temps égal à celui nécessaire à synthétiser un polymère de masse moléculaire moyenne en poids de 50.000 g/mol à partir d'une monoalcoxyamine. C'est grâce à cette découverte qu'il est possible, dans le cadre de l'invention, de faire des polymères contrôlés (et vivants) présentant une distribution de masses bi ou multimodale par simple polymérisation à partir d'un mélange d'alcoxyamines aux fonctionnalités différentes sans qu'il ne soit nécessaire de modifier les conditions de polymérisation par rapport à la synthèse d'un polymère qui ne serait constitué que du groupe de molécules de basse masse.

Par rapport aux systèmes d'initiation de polymérisatoin radicalaire controlée sur base d'une alcoxyamine du TEMPO de l'art antérieur, les alcoxyamines particulières utilisées dans le cadre de la présente invention procurent une cinétique dépendant du rapport molaire entre le monomère et les fonctions alcoxyamine, et de plus permettent de polymériser de manière contrôlée d'autres monomères que le styrène ou ses dérivés, tels que les acrylates, les méthacrylates, l'acrylonitrile, les acryliques.

L'invention concerne un procédé de préparation d'un polymère multimodal par polymérisation radicalaire d'au moins un monomère en présence de plusieurs alcoxyamines comprenant l'enchaînement de formule

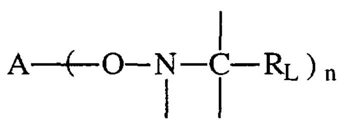

(1)

dans laquelle $R_L$ est un radical monovalent présentant une masse molaire supérieure à 15 (ce qui exclut le radical méthyle qui a la masse 15), A est le coeur de l'alcoxyamine, n est un nombre entier non nul, lesdites alcoxyamines présentant des valeurs de n différents.

Compte tenu de sa position, le radical $R_L$ est dit en position bêta par rapport à l'atome d'azote. La valeur de n dans la formule (1) représente la fonctionnalité de l'alcoxyamine, c'est- à-dire le nombre de radicaux nitroxyde de formule

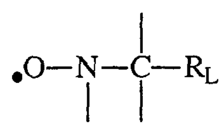

(2)

qu'il porte et peut libérer lors de la polymérisation. Dans le cadre de la présente invention, on dit que l'alcoxyamine de formule (1) porte le nitroxyde de formule (2). Le nitroxyde de formule (2) lui-même est un radical libre stable. Sa molécule ne présente l'état de radical stable qu'à un seul endroit, c'est-à-dire un seul électron célibataire caractéristique de l'état de radical lequel se trouve sur la liaison N-O de la formule (2), ce qui est généralement représenté par N-O•. L'alcoxyamine. pour le cas où n est supérieur à 1, peut porter plusieurs nitroxydes de formule (2) différents entre eux.

Il est rappelé que la notion de radical libre stable est connue de l'homme du métier pour désigner un radical tellement persistant et non réactif vis-à-vis de l'air et de l'humidité dans l'air ambiant, que le radical pur peut être manipulé et stocké sans plus de précautions à la température ambiante que le sont la majorité des produits chimiques commerciaux (voir à ce sujet D. Griller et K. Ingold, Accounts of Chemical Research, 1976, 9, 13-19, ou Organic Chemistry of Stable Free Radicals, A. Forrester et coll., Academic Press, 1968).

Il ne faut pas confondre un radical libre stable avec les radicaux libres dont la durée de vie est éphémère (quelques millisecondes) comme les radicaux libres issus des amorceurs habituels de polymérisation comme les peroxydes, hydroperoxydes et amorceurs de type azoïques. Les radicaux libres amorceurs de polymérisation tendent à accélérer la polymérisation. Au contraire, les radicaux libres stables tendent généralement à ralentir la polymérisation. On peut généralement dire qu'un radical libre est stable au sens de la présente invention s'il n'est pas amorceur de polymérisation et si, dans les conditions d'utilisation de la présente invention, la durée moyenne de vie du radical est d'au moins une minute. Au cours de cette durée moyenne de vie, les molécules du radical libre stable alternent en permanence l'état de radical et l'état de groupement lié par une liaison covalente à une chaîne de polymère. Bien entendu, il est préférable que le radical libre stable présente une bonne stabilité pendant toute la durée de son utilisation dans le cadre de la présente invention. Généralement, un radical libre stable peut être isolé à l'état de radical à la température ambiante. Un radical libre stable est suffisamment stable pour que son état de radical libre puisse être caractérisé par les méthodes spectroscopiques.

Le radical libre stable forme pendant la polymérisation une liaison réversible avec la chaîne de polymère en croissance. En bout de chaîne de polymère, le radical libre stable alterne en permanence l'état de groupement lié par une liaison covalente à ladite chaîne et l'état de radical libre stable détaché de ladite chaîne pour laisser s'insérer une unité de monomère, suivant le processus suivant,

$$1) \quad -M-T \rightleftharpoons -M^{\bullet} + T^{\bullet}$$

$$2) \quad -M^{\bullet} + M + T^{\bullet} \rightarrow -M-M-T$$

dans lequel -M représente une unité de monomère de la chaîne en croissance, M représente une unité de monomère et T• représente le radical libre stable monofonctionnel de formule (2), dont la molécule n'est porteuse que d'un seul site présentant l'état de radical. Ce processus se repète pour faire croître la chaîne de polymère par insertion de monomère entre la chaîne en croissance et le radical libre stable.

Ainsi, chaque alcoxyamine peut être représentée par $A(-T)_n$, A et T ayant les significations déjà données, n étant un nombre entier au moins égal à 1, de sorte qu'en début de polymérisation, les liaisons entre A et les T se scindent pour former d'une part le radical $A^{n\bullet}$ qui amorce la polymérisation, et d'autre part les radicaux stables T• qui contrôlent la polymérisation. Ainsi, la chaîne de polymère croit entre A et les extrémités T. L'alcoxyamine de formule $A(-T)_n$ peut comprendre des entités T de nature différente.

Ainsi, dans le cas de l'utilisation de deux alcoxyamines A1 et A2 celles-ci peuvent être telles que leurs fonctionnalitées respectives $F_{A1}$ et $F_{A2}$ correspondent à l'une des combinaisons listées dans le tableau ci-dessous:

| **COMBINAISON** | |
|---|---|
| $F_{A1}$ | $F_{A2}$ |
| 1 | 2 |
| 1 | 3 |
| 1 | 4 |
| 1 | 5 |
| 1 | 6 |
| 1 | 7 |
| 1 | 8 |
| 2 | 4 |
| 2 | 5 |
| 2 | 7 |

Les valences restantes de l'atome de carbone et de l'atome d'azote dans les formules (1) et (2) peuvent être liées à des radicaux divers tels qu'un atome d'hydrogène, un radical hydrocarboné comme un radical alkyle, aryle ou aralkyle, comprenant de 1 à 10 atomes de carbone, l'atome de carbone et l'atome d'azote dans chacune des formules (1) et (2) peuvent être également reliés entre eux par l'intermédiaire d'un radical bivalent, de façon à former un cycle; de préférence cependant, les valences restantes de l'atome de carbone et de l'atome d'azote des formules (1) et (2) sont liées à des radicaux monovalents ; à titre d'illustration de tels radicaux monovalents, on citera les radicaux éthyle,

propyle, butyle, tertiobutyle, isopropyle.

De préférence, le radical $R_L$ présente une masse molaire supérieure à 16 et de manière encore préférée supérieure à 30. Le radical $R_L$ peut par exemple avoir une masse molaire comprise entre 40 et 450. A titre d'exemple, le radical $R_L$ peut être un radical comprenant un groupement phosphoryle, c'est-à-dire un groupement ≡P=O, ledit radical $R_L$ pouvant être représenté par la formule

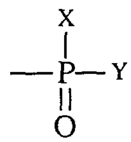

(3)

dans laquelle X et Y, pouvant être identiques ou différents, peuvent être choisis parmi les radicaux alkyle, cycloalkyle, alkoxyle, aryloxyle, aryle, aralkyloxyle, perfluoroalkyle, aralkyle et peuvent comprendre de 1 à 20 atomes de carbone ; X et/ou Y peuvent également être un atome d'halogène comme un atome de chlore ou de brome ou de fluor ou d'iode .

Le radical $R_L$ peut également comprendre au moins un cycle aromatique tel que le radical phényle ou le radical naphtyle, ce dernier pouvant être substitué, par exemple par un radical alkyle comprenant de 1 à 10 atomes de carbone.

De préférence, l'atome de carbone portant le radical $R_L$ porte également au moins un atome d'hydrogène, c'est-à-dire porte un ou deux atomes d'hydrogène.

A titre d'exemple de nitroxyde de formule (2) pouvant être porté par l'alcoxyamine de formule (1), on peut citer:

- le N-tertiobutyl-1-phényl-2-méthylpropyl nitroxyde,
- le N-(2-hydroxyméthylpropyl)-1-phényl-2-méthylpropylnitroxyde,
- le N-tertiobutyl-1-diéthylphosphono-2,2-diméthyl-propylnitroxyde,
- le N-tertiobutyl-1-dibenzylphosphono-2,2-diméthyl-propylnitroxyde,
- le N-tertiobutyl-1-di(2,2,2-trifluoroéthyl)phosphono-2,2-diméthylpropylnitroxyde,
- le N-tertiobutyl[(1-diéthylphosphono)-2-méthylpropyl]nitroxyde,
- le N-(1-méthyléthyl)-1-cyclohexyl-1-(diéthyl-phosphono)nitroxyde,
- le N-(1-phénylbenzyl)-[(1-diéthylphosphono)-1-méthyléthyl]nitroxyde,
- le N-phényl-1-diéthylphosphono-2,2-diméthylpropylnitroxyde,
- le N-phényl-1-diéthylphosphono-1-méthyléthylnitroxyde,
- le N-(1-phényl-2-méthylpropyl)-1-diéthylphosphonométhyléthylnitroxyde.

Si l'alcoxyamine est monofonctionnelle (n = 1 dans la formule (1)), A est un radical monofonctionnel et peut par exemple être choisi parmi :

- les radicaux styryle de formule

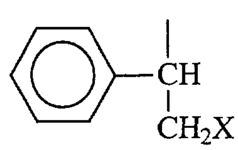

dans laquelle le radical phényle est éventuellement substitué et X représente un atome d'halogène ou un radical hydroxy, phénoxy, alcoxy, acyl, cyano;
- les radicaux acyle de formule

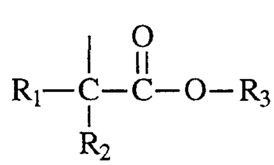

dans laquelle $R_1$, $R_2$ et $R_3$ sont identiques ou différents et représentent un atome d'hydrogène, un radical alkyle linéaire ou ramifié comprenant 1 à 20 atomes de carbone et de préférence 1 à 8 atomes de carbone, un radical aryle éventuellement substitué, le radical $R_3$ pouvant de plus comprendre un ou plusieurs hétéroatomes tel que l'atome d'azote, d'oxygène ou de fluor.

A titre d'exemple, l'alcoxyamine monofonctionnelle peut être choisie parmi les alcoxyamines représentées par les formules suivantes:

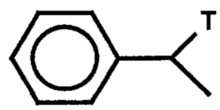

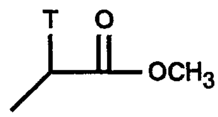

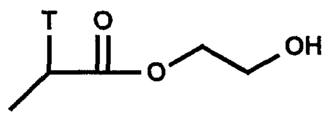

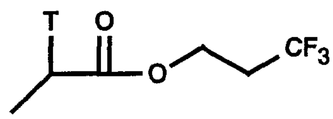

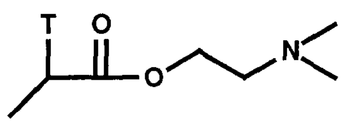

dans lesquelles T a la signification déjà donnée, c'est-à-dire représente le nitroxyde de formule (2).

Si l'alcoxyamine est multifonctionnel, A est un radical multivalent. L'alcoxyamine peut alors être l'une de celles décrites dans la demande de brevet français n° 99 06329. On donne ci-après des exemples de radicaux A multifonctionnels ayant vocation à faire partie d'une alcoxyamine multifonctionnelle:

a)

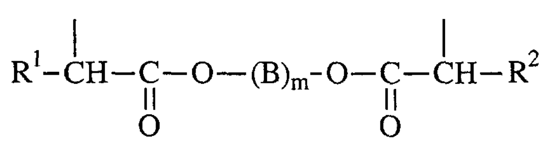

(4)

dans laquelle $R^1$ et $R^2$, identiques ou différents, représentent un radical alkyle, linéaire ou ramifié ayant un nombre d'atomes de carbone allant de 1 à 10, des radicaux phényle ou thiényle éventuellement substitués par un atome d'halogène tel que F, Cl, Br, ou bien par un radical alkyle, linéaire ou ramifié, ayant un nombre d'atomes de carbone allant de 1 à 4, ou bien encore par des radicaux nitro, alcoxy, aryloxy, carbonyle, carboxy ; un radical benzyle, un

radical cycloalkyle ayant un nombre d'atomes de carbone allant de 3 à 12, un radical comportant une ou plusieurs insaturations ; B représente un radical alkylène linéaire ou ramifié, ayant un nombre d'atomes de carbone allant de 1 à 20 ; m est un nombre entier allant de 1 à 10;

b)

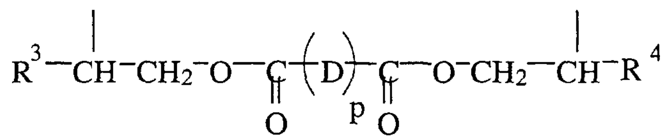

(5)

dans laquelle $R^3$ et $R^4$, identiques ou différents, représentent des radicaux aryle, pyridyle, furyle, thiényle éventuellement substitués par un atome d'halogène tel que F, Cl, Br, ou bien par un radical alkyle, linéaire ou ramifié, ayant un nombre d'atomes de carbone allant de 1 à 4, ou bien encore par des radicaux nitro, alcoxy, aryloxy, carbonyle, carboxy ; D représente un radical alkylène, linéaire ou ramifié, ayant un nombre d'atomes de carbone allant de 1 à 6, un radical phénylène, un radical cycloalkylène ; p allant de 0 à 10 ;

c)

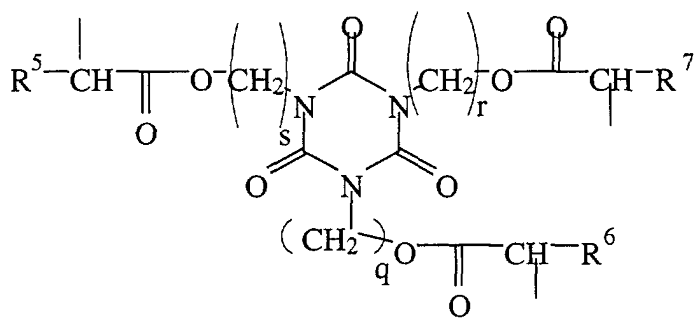

(6)

- dans laquelle $R^5$, $R^6$ et $R^7$, identiques ou différents, ont les mêmes significations que $R^1$ et $R^2$ de la formule (4), q, r et s sont des nombres entiers allant de 1 à 5 ;

d)

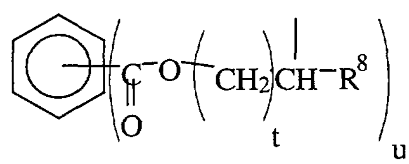

(7)

dans laquelle $R^8$ a la même signification que $R^3$ et $R^4$ de la formule (5), t est un nombre entier allant de 1 à 4, u est ≥2 et ≤6 ;

e)

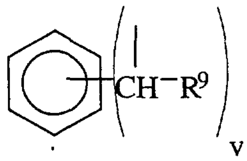

(8)

dans laquelle $R^9$ a la même signification que le radical $R^8$ de la formule (7) et v est ≥2 et ≤6 ;

f)

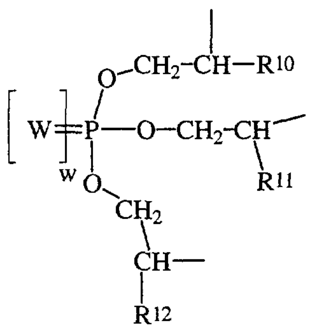

(9)

dans laquelle $R^{10}$, $R^{11}$ et $R^{12}$, identiques ou différents, représentent un radical phényle, éventuellement substitué par un atome d'halogène tel que Cl, Br, ou bien par un radical alkyle, linéaire ou ramifié, ayant un nombre d'atomes de carbone allant de 1 à 10, ; W représente un atome d'oxygène, de soufre, de sélénium, w est égal à zéro ou 1 ;

g)

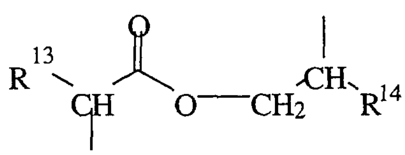

(10)

dans laquelle $R^{13}$ a la même signification que $R^1$ de la formule (4), $R^{14}$ a la même signification que $R^3$ ou $R^4$ de la formule (5) ;

h)

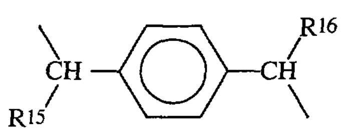

(11)

dans laquelle $R^{15}$ et $R^{16}$ identiques ou différents représentent un atome d'hydrogène, un radical alkyle, linéaire ou ramifié ayant un nombre d'atomes de carbone allant de 1 à 10, un radical aryle, éventuellement substitué par un atome d'halogène ou un hétéro atome,

Les alcoxyamines peuvent également être préparées par réaction d'un initiateur de radicaux libres sur un

radical libre stable de formule (2). Ainsi, si l'initiateur est bifonctionnel (c'est-à-dire que chacune de ses molécules engendre la formation de deux atomes présentant l'état de radical) comme la plupart des initiateurs classiques commercialisés, et qu'on le représente par B-B dans la mesure où sa dissociation engendre la formation de deux radicaux libres B•, l'alcoxyamine formée aura la formule B-T, T ayant la signification déjà donnée. Une telle alcoxyamine est monofonctionnelle (n = 1 dans la formule 1). Comme exemple d'initiateur bifonctionnel donnant lieu à la formation d'une alcoxyamine monofonctionnelle, on peut citer le peroxyde de dicumyle ou l'azobisisobutyronitrile (AIBN).

L'initiateur de radicaux libre peut avoir une fonctionnalité supérieure à 2 et notamment 4.

Comme exemple d'initiateur dont la fonctionnalité est de 4, on peut citer le 3,3-di(tert-amylperoxy)-butyrate d'éthyle que l'on peut représenter par :

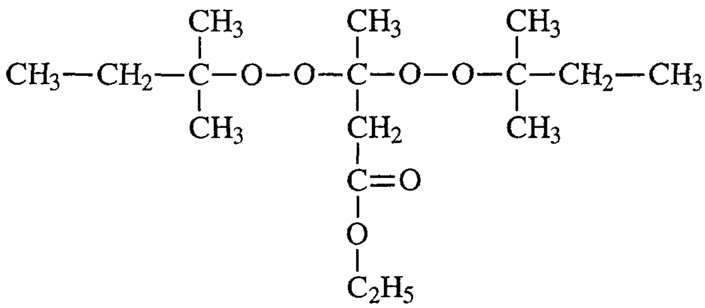

Ce peroxyde peut être représenté par $B^a$-$B^b$-$B^a$, ledit peroxyde donnant lieu à la formation des radicaux $B^a$• et $B^{b2}$•, lesquels aboutissent respectivement aux alcoxyamines $B^a$-T (monofonctionnelle) et T-$B^b$-T (pouvant également être représentée par $B^b$-$T_2$) (bifonctionnelle).

Au moins l'une des alcoxyamines peut être générée en présence de monomère, grâce au traitement thermique d'un initiateur de radicaux libres et d'un nitroxyde de formule (2) en présence de monomère. Ainsi, si l'initiateur est bifonctionnel, et qu'on le représente par B-B dans la mesure ou sa dissociation engendre la formation de deux radicaux libres B•, l'alcoxyamine formée aura la formule B-$(M)_m$-T, T ayant la signification déjà donnée et M représentant le monomère polymérisable par voie radicalaire et m étant un nombre entier non nul. Une telle alcoxyamine est monofonctionnelle (n = 1 dans la formule 1). Si l'initiateur est de formule $B^a$-$B^b$-$B^a$ (comme vu ci-dessus), ledit initiateur donnant lieu à la formation des radicaux $B^a$• et $B^{b2}$•, les alcoxyamines $B^a$-$(M)_m$-T (monofonctionnelle) et T-$(M)_m$-$B^b$-$(M)_m$-T (bifonctionnelle) se formeront en mélange, m et m' représentant des nombres entiers non nuls. Dans le cadre de la présente invention, au moins l'une des alcoxyamines peut donc comprendre des unités polymérisées d'un monomère polymérisable par voie radicalaire, ledit monomère étant identique ou différent du monomère que l'on se propose de polymériser avec ladite alcoxyamine. Au moins l'une des alcoxyamines peut donc aussi être générée in situ dans le milieu de polymérisation en présence du monomère à polymériser et au début de la polymérisation selon le principe qui vient d'être donné.

Si l'on se propose de préparer une alcoxyamine par le traitement thermique d'un initiateur de radicaux libres et d'un nitroxyde de formule (2), ces deux ingrédients seront chauffés, en présence ou non de monomère polymérisable par voie radicalaire, en présence ou non d'un solvant, à une température suffisante pour que l'initiateur génère ses radicaux libres. De préférence, ce traitement thermique est réalisé au moins partiellement à une température allant de $Temp_{½}$ - 20°C et $Temp_{½}$ + 20°C $Temp_{½}$ représentant la température pour laquelle 50 % de l'initiateur s'est décomposé en une heure. Certains initiateurs tels que les peracides, les peresters, les peracyles, les percarbonates ou les percétals, pouvant donner lieu à des réactions secondaires avec le nitroxyde de formule (2), il est préférable, pour ces initiateurs de procéder au traitement thermique en présence de monomère polymérisable par voie radicalaire., de façon à ce que l'alcoxyamine produite contienne dès le début au moins une unité de monomère, sans passer par la formation d'alcoxyamine exempte d'unité de monomère. L'initiateur et le nitroxyde sont mis chacun en quantité suffisante pour former l'alcoxyamine souhaitée. Généralement, il est préférable de mettre le nitroxyde en excès par rapport à la stoechiométrie de l'alcoxyamine visée, notamment si des réactions secondaires consommant du nitroxyde sont à redouter. Si l'on désigne par:

- (SFR) le nombre de moles de radical libre stable,
- (INIT) le nombre de moles d'initiateur de radicaux libres,
- $F_{INIT}$ la fonctionnalité de l'initiateur de radicaux libres, c'est-à-dire le nombre d'atomes présentant l'état de radical libre que chaque molécule d'initiateur est capable de générer,

on introduit généralement les ingrédients nécessaires à la fabrication de l'alcoxyamine de sorte que le rapport [(SFR)]

/ [(INIT) $F_{INIT}$] soit compris entre 0,8 et 1,5 , de préférence entre 1 et 1,4.

L'initiateur de radicaux libres peut être choisi parmi les amorceurs de polymérisation radicalaires connus. L'initiateur de radicaux libres est un amorceur de polymérisation radicalaire pouvant être choisi parmi les peroxydes de diacyle, les peroxyesters, les peroxydes de dialkyle, les peroxyacétals, les composés azoïques. Des initiateurs de radicaux libres particulièrement adaptés sont les suivants :

- carbonate d'isopropyle et de peroxy-tert-butyle,
- carbonate d'éthyle-2 hexyle et de peroxy-tert-butyle,
- peroxyde de dicumyle,
- peroxyde de ditertiobutyle,
- bis(tert-butylperoxy)-1,1cyclohexane,
- bis(tert-butylperoxy)-1,1triméthyl-3,3,5 cyclohexane,
- tertiobutylperoxyacétate,
- peroxyde de cumyle et de tertiobutyle,
- perbenzoate de tertiobutyle,
- éthyl-2 perhexanoate de tertiobutyle.
- bis(tert-butylperoxy)-2,2butane,
- bis(tert-butyl)-4,4valérate de butyle,
- bis(tert-butyl)-3,3butyrate d'éthyle,
- 2,2-bis(4,4-ditert-butylperoxycyclohexyl)propane.

Comme initiateur de type azoïque, on peut citer la famille réprésentée par la formule

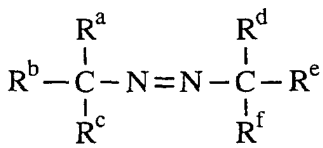

dans laquelle $R^a$, $R^b$, $R^c$, $R^d$, $R^e$, $R^f$, pouvant être identiques ou différents, représentent un radical alkyle linéaire ou ramifié comprenant par exemple 1 à 12 atomes de carbone, ou un groupement polaire tel qu'un groupement cyano ou ester ou guanidine ou acide. A titre d'exemple de tels initiateurs on peut citer:

- le 4,4'azobis(4-acide cyanopentanoïque),
- le 2,2'azobis(2- méthylbutyronitrile),
- le dichlorhydrate de 2,2' azobis(2-aminopropane),
- l'azobisisobutyronitrile.

Par monomère, on entend tout monomère polymérisable ou copolymérisable par voie radicalaire. Le terme "monomère" recouvre bien entendu les mélanges de plusieurs monomères.

Le monomère peut être choisi parmi les monomères vinyliques, vinylidéniques, diéniques et oléfiniques, allyliques.

Par monomères vinyliques, on entend l'acide acrylique ou ses sels de métaux alcalins ou alcalino-terreux tels que le sodium, le potassium ou le calcium, les (méth)acrylates, les monomères vinylaromatiques, les esters vinyliques, le (méth)acrylonitrile, le (méth)acrylamide et les mono- et di-(alkyl à 1 à 18 atomes de carbone)-(méth)acrylamides, et les monoesters et diesters de l'anhydride maléique et de l'acide maléique.

Les (méth)acrylates sont en particulier ceux des formules respectivement :

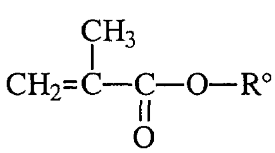

et

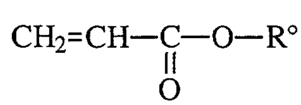

dans lesquelles R° est choisi parmi les radicaux alkyle comprenant de 1 à 18 atomes de carbone, linéaires ou

ramifiés, primaires, secondaires ou tertiaires, cycloalkyle comprenant de 5 à 18 atomes de carbone, (alcoxy à 1 à 18 atomes de carbone)-alkyle à 1 à 18 atomes de carbone, (alkylthio à 1 à 18 atomes de carbone)-alkyle à 1 à 18 atomes de carbone, aryle et arylalkyle, ces radicaux étant éventuellement substitués par au moins un atome d'halogène (tel que le fluor) et/ou au moins un groupe hydroxyle après protection de ce groupe hydroxyle, les groupes alkyle ci-dessus étant linéaires ou ramifiés ; et les (méth)acrylates de glycidyle, de norbornyle, d'isobornyle.

Comme exemples de méthacrylates, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle,de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle.

Comme exemples d'acrylates de la formule ci-dessus, on peut citer les acrylates de méthyle, d'éthyle, de n-propyle, d'isopropyle, de n-butyle, de sec.-butyle, de tert.-butyle d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle, d'éthoxyéthyle, de perfluorooctyle, de behenyle.

Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène, le dichloro-2,4-styrène, le dichloro-2,6-styrène et le vinyl-1-naphtalène.

Comme esters vinyliques, on peut citer l'acétate de vinyle, le propionate de vinyle, le chlorure de vinyle et le fluorure de vinyle.

Comme monomère vinylidénique, on cite le fluorure de vinylidène.

Par monomère diénique, on entend un diène choisi parmi les diènes linéaires ou cycliques, conjugués ou non-conjugués comme par exemple le butadiène, le 2,3-diméthyl-butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylène-2-norbornène, le 5-(2-propényl)-2-norbornène, le 5-(5-héxényl)-2-norbornène, le 1,5-cyclooctadiène, le bicyclo[2.2.2]octa-2,5-diène, le cyclopentadiène, le 4,7,8,9-tétrahydroin-dène et l'isopropylidène tétrahydroindène.

Comme monomères oléfiniques, on peut citer l'éthylène, le butène, l'hexène et le 1-octène. Les monomères oléfiniques fluorés peuvent également être cités.

Le procédé selon l'invention permet la préparation de polymères à blocs. En effet, la polymérisation d'un premier monomère par le procédé selon l'invention mène à un bloc de polymère vivant. Il est alors possible de raccorder à ce premier bloc, un bloc d'un autre polymère en plaçant le premier bloc de polymère vivant dans un milieu de polymérisation d'un second monomère. Il est ainsi possible de réaliser des copolymères à blocs, par exemple, des copolymères comprenant un ou plusieurs blocs de polystyrène et un ou plusieurs blocs de polybutadiène, ou des copolymères comprenant un ou plusieurs blocs de polystyrène et un ou plusieurs blocs du type méthacrylate et un ou plusieurs blocs du type acrylate.

En pratique, la réalisation des blocs peut se faire à la suite les uns des autres, dans le même appareillage. Lorsque le premier monomère est consommé de façon à réaliser le premier bloc, il suffit d'introduire le second monomère destiné à la réalisation du second bloc, sans arrêter l'agitation et sans refroidissement ou autre interruption. Bien entendu, suivant la nature des monomères, les conditions de constitution de chacun des blocs, comme la température, pourront être adaptées.

Bien entendu, il est possible d'accoler autant de blocs que l'on souhaite au polymère vivant en plaçant celui-ci dans un milieu de polymérisation d'un monomère dont on souhaite constituer un bloc.

Ainsi, l'invention concerne également un procédé de préparation d'un polymère à blocs comprenant au moins une étape selon l'invention, menant à un premier bloc vivant, ledit bloc vivant étant ensuite placé en présence d'au moins un autre monomère dont on souhaite constituer un bloc accolé au premier bloc, de façon à former un dibloc vivant, et ainsi de suite, suivant le nombre de blocs que l'on souhaite réaliser.

Ainsi, la présente demande concerne également un procédé de préparation d'un polymère dibloc comprenant une étape de polymérisation d'un premier monomère conformément à l'invention, de façon à obtenir un premier bloc vivant, suivie d'une étape au cours de laquelle le premier bloc vivant est placé en présence d'un second monomère que l'on polymérise de façon à former un second bloc accolé au premier bloc.

La présente demande concerne donc également un procédé de préparation d'un polymère tribloc comprenant une étape de polymérisation d'un troisième monomère en présence du polymère dibloc préparé conformément à ce qui vient d'être dit, de façon à former un troisième bloc accolé au polymère dibloc.

Lorsque l'on souhaite réaliser un copolymère à bloc sur le principe de ce qui vient d'être dit, la polymérisation d'un nouveau monomère peut être effectuée de différentes manières et notamment celles-ci:

a) ajout du nouveau monomère directement au milieu de polymérisation en changeant ou non de température de

polymérisation;
b) ajout du nouveau monomère, après évaporation du monomère résiduel précédent en changeant ou non de température de polymérisation
c) ajout du nouveau monomère après avoir bloqué la polymérisation précédente en baissant la température, en évaporant ou non le monomère résiduel précédent, puis en remontant la température à une nouvelle température de polymérisation adaptée au nouveau monomère.

A titre d'exemples, les polymères à blocs suivants peuvent être réalisés :

polystyrène-b-polyméthacrylate de méthyle,
polystyrène-b-polystyrènesulfonate,
polystyrène-b-polyacrylamide,
polystyrène-b-polyméthacrylamide,
polyméthacrylate de méthyle-b-polyacrylate d'éthyle,
polystyrène-b-polyacrylate de butyle,
polybutadiène-b-polyméthacrylate de méthyle,
polyisoprène-b-polystyrène-co-acrylonitrile,
polybutadiène-b-polystyrène-co-acrylonitrile,
polystyrène-co-acrylate de butyle-b-polyméthacrylate de méthyle,
polystyrène-b-polyacétate de vinyle,
polystyrène-b-polyacrylate de 2-éthylhexyle,
polystyrène-b-polyméthacrylate de méthyle-co-acrylate d'hydroxyéthyle,
polystyrène-b-polybutadiène-b-polyméthacrylate de méthyle,
polybutadiène-b-polystyrène-b-polyméthacrylate de méthyle,
polystyrène-b-polyacrylate de butyle-b-polystyrène,
polystyrène-b-polybutadiène-b-polystyrène,
polystyrène-b-polyisoprène-b-polystyrène,
polyacrylate de perfluorooctyle-b-polyméthacrylate de méthyle,
polyacrylate de perfluorooctyle-b-polystyrène,
polyacrylate de perfluorooctyle-b-polyacrylate de behenyle,
polyacrylate de perfluorooctyle-b-polyméthacrylate de stéaryle,
polyacrylate de n-octyle-b-polyméthacrylate de méthyle.

Si, dans le cadre de la présente invention, on se propose de réaliser un polymère multimodal à N modes (N différents groupes de molécules; N est donc un nombre entier non nul), en utilisant plusieurs alcoxyamines, lesdites alcoxyamines étant toutes porteuses du même radical stable nitroxyde et ne portant pas d'autre type de radical stable (nitroxyde ou non nitroxyde), il est possible de prévoir l'importance et la masse moléculaire moyenne en nombre de chaque mode (c'est-à-dire chaque population de molécules) dès lors que l'on connaît la masse et l'importance du mode de plus basse masse. Ainsi, dans ce cadre là, si la polymérisation est amorcée par un mélange de N alcoxyamines A1, ...Ai, ...AN, dont les fonctionnalités sont respectivement de n1, ...ni,...nN, la fonctionnalité desdites alcoxyamines étant croissante en même temps que i de sorte que A1 a la plus basse fonctionalité des alcoxyamines et AN a la plus forte fonctionnalité des alcoxyamines, la fonctionnalité de l'alcoxyamine Ai étant xi fois supérieure à celle de l'alcoxyamine A1 (xi = ni/n1), lesdites alcoxyamines étant engagée dans le milieu à polymériser avec respectivement les concentrations (A1), ...(Ai), ...(AN), de sorte que la proportion de chaque alcoxyamine peut être déterminée relativement à l'alcoxyamine A1 par yi = $(A_i)/(A_1)$, chaque alcoxyamine menant à une population de molécules de masse moléculaire moyenne en nombre Mi avec la proportion Pi (Pi étant donc égal au rapport de la masse de polymère issu de Ai sur la masse totale de polymère) de sorte que $y_i = (\Sigma x_j y_j) P_i / x_i(1- P_i)(j \neq i)$, alors, les relations suivantes sont observées:

$$M_i = x_i \, . \, M_1,$$

$$P_i = X_i \, y_i / (\Sigma x_i y_i)$$

Dans ces conditions, il suffit de réaliser un essai avec l'alcoxyamine A1 pour prévoir la distribution des masses moléculaires du polymère final amorcé avec N alcoxyamines, à conditions de polymérisation par ailleurs identiques.
Ce monomère peut être introduit soit directement pour une polymérisation en masse soit en solution soit dans un système de type émulsion.

Au cours de la polymérisation, et suivant la nature de l'alcoxyamine utilisée, il est possible que la partie nitroxyde de l'alcoxyamine vienne à diminuer en concentration du fait de réactions secondaires. Dans ce cas, et de manière à ce que la polymérisation garde suffisamment son caractère contrôlée, on pourra éventuellement ajouter au milieu une quantité choisie (en fonction de la quantité à remplacer) de nitroxyde supplémentaire, ce nitroxide pouvant ou non correspondre à celui constitutif de l'alcoxyamine concerné mais restant conforme à la formule (2).

Les alcoxyamines peuvent être mélangées entre elles avant introduction dans le réacteur de polymérisation, ou être introduits séparément dans le réacteur de polymérisation. De tels mélanges d'alcoxyamines sont également un objet de la présente invention. Le milieu de polymérisation dans le cadre de la présente invention est lui-même un tel mélange d'alcoxyamines.

Les polymères obtenus peuvent être caractérisés par chromatographie à perméation de gel (GPC). Le chromatogramme permet de visualiser chaque groupe de molécules de polymère.

Notamment, on peut utiliser la technique ci-après décrite et utilisée pour les exemples:

On utilise deux colonnes PL gel mixed bed de la société Polymer Laboratories de 30 cm en série pour analyser un échantillon de 80 microlitres d'une solution à 2 g/l de polymère dans le THF. L'élution est de 1 ml / min et la température de colonne 40°C. La détection est assurée par un réfractomètre Waters 2410 réglé à 30°C en mode différentiel positif. Il possède une sensibilité de 4 mV.

La polymérisation ou la copolymérisation est réalisée dans les conditions habituelles connues de l'homme du métier compte tenu du ou des monomères considérés. Ainsi, la polymérisation ou la copolymérisation peut être réalisée en masse, en solution, en émulsion, en suspension, à des températures allant de 50°C à 250°C et, de préférence, allant de 70°C à 160°C.

Selon la fonctionnalité des alcoxyamines choisies, la polymérisation peut généralement être menée de sorte qu'elle mène à un polymère multimodal dont au moins l'une des populations de molécules présente une masse moléculaire moyenne en nombre allant de 10 000 à 200 000, par exemple de 30 000 à 150 000, et dont au moins une autre population de molécules présente une masse moléculaire moyenne en nombre allant de 20 000 à 2 000 000, par exemple de 60 000 à 1 200 000. Généralement, dans le cadre de la présente invention, on utilise de 2 à 5 et de préférence 2 ou 3 alcoxyamines présentant des valeurs de n (de la formule (1)) différents, de façon à aboutir à un polymère multimodal présentant le même nombre de populations différentes que le nombre d'alcoxyamines différentes utilisées, c'est-à-dire que le polymère multimodal obtenu présente généralement de 2 à 5 populations et de préférence 2 ou 3. De façon à éventuellement augmenter les masses moléculaires moyennes en nombre du polymère final, on peut augmenter le rapport molaire monomère / alcoxyamine et/ou la durée de la réaction.

La présente demande concerne également les compositions comprenant plusieurs alcoxyamines comprenant chacune l'enchainement de formule (1) déjà décrit, lesdites alcoxyamines présentant des valeurs de n différents. Dans ces compositions, les radicaux $R_L$ d'au moins deux des alcoxyamines présentent de préférence une masse molaire supérieure à 16. Dans ces compositions, le radical $R_L$ d'au moins une, voire deux des alcoxyamines présente de préférence une masse molaire supérieure à 30, et de manière encore préférée comprise entre 40 et 450. Dans ces compositions, le radical $R_L$ d'au moins une voire deux des alcoxyamines peut comprendre un groupement phosphoryle. Dans ces compositions, au moins une voire deux des alcoxyamines est de préférence telle que l'atome de carbone portant le radical $R_L$ porte également au moins un atome d'hydrogène. Dans ces compositions, les alcoxyamines peuvent présenter des fonctionnalités selon des combinaisons déjà mentionnées, par exemple au moins l'une a une fonctionnalité de 1 et au moins une autre a une fonctionnalité d'au moins 2, par exemple de 2 à 8.

Dans ces compositions, au moins une voire deux des alcoxyamines, peut être préparée par réaction entre un initiateur de radicaux libres et un nitroxyde, le cas échéant en présence de monomère polymérisable par voie radicalaire. Comme il a déjà été expliqué, au moins une voire deux des alcoxyamines peut comprendre des unités polymérisées d'au moins un monomère polymérisable par voie radicalaire.

La composition selon l'invention peut être un mélange préparé avant toute polymérisation et destiné à être utilisé pour amorcer une polymérisation radicalaire contrôlée selon un procédé de l'invention. Au cours du procédé de polymérisation selon l'invention, le milieu de polymérisation doit également être considéré comme étant lui-même une composition selon l'invention puisque les chaînes de polymère en croissance comprennent à leurs extrémitées les nitroxydes de formule (2) et forment donc avec ceux-ci des alcoxyamines de formule (1) dont les coeurs A comprennent les unités polymérisées de monomère. Dans ce cas, la polymérisation se déroule en présence d'une composition selon l'invention. En conséquence, le polymère multimodal réalisé grâce au procédé selon l'invention, au cours de la polymérisation ou après la polymérisation est également une composition selon l'invention. Dans un tel polymère multimodal, chaque population de molécules est lié à l'une des alcoxyamines. La composition comprenant un tel polymère est également une composition selon l'invention.

Dans les exemples qui suivent, on utilise notamment les produits suivants :

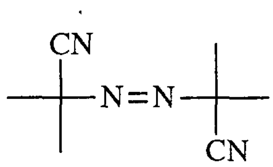

AIBN

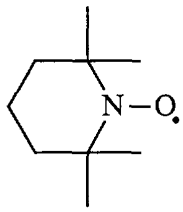

TEMPO

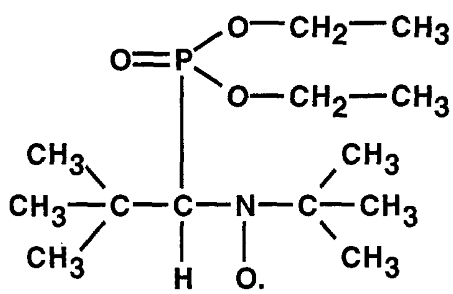

SG1

SG1 est le nom donné au nitroxyde N 1-diéthylphosphono 2-diméthyl-N 1-diméthyléthyl N oxyl (pouvant également être appelé N-tertiobutyl-1-diéthylphosphono-2,2-diméthylpropyl nitroxyde). TEMPO est celui donné au 2,2,6,6 tétraméthylpipéridine-N-Oxyl.

On utilise également les alcoxyamines suivantes :

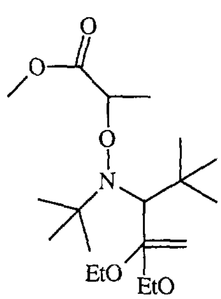

**Monams**

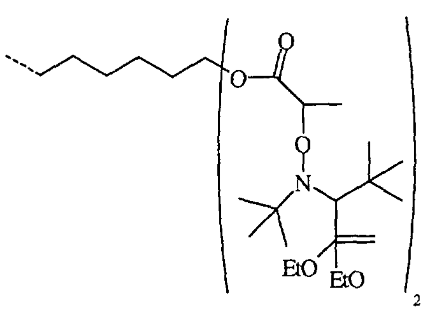

**Diams**

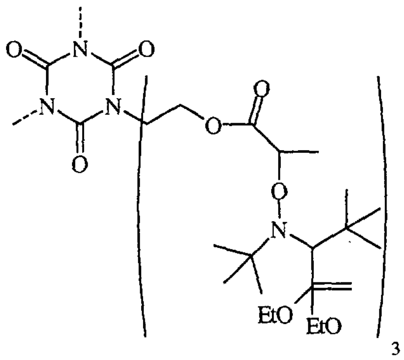

Triams

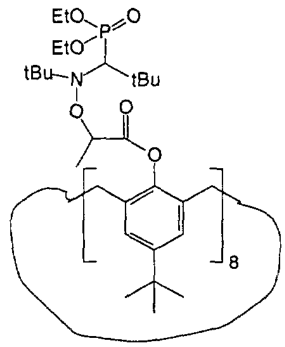

Octopus

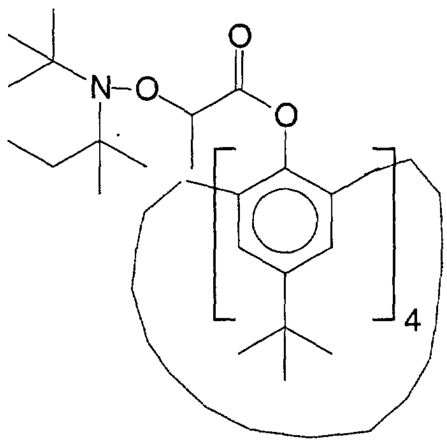

Tétratempo

Dans les formules qui viennent d'être données, tBu représente le radical tertiobutyle et Et désigne le radical éthyle.

Dans les exemples qui suivent on a utilisé les abréviations suivantes:

Mw: Masse moléculaire moyenne en poids;
Mn: Masse moléculaire moyenne en nombre;
Ip: indice de polymolécularité, égal à Mw/Mn;
GPC: chromatographie à perméation de gel ("gel permeation chromatographie" en anglais);
Cv: conversion de monomère en polymère, ladite conversion étant égale au rapport 100.(M°-M)/M dans lequel M° représente la concentration initiale en monomère et M représente la concentration de monomère à un instant donné.

**<u>Exemple 1: mélange alcoxyamine-initiateur avec un apport supplémentaire de nitroxyde SG1:</u>**

On introduit dans un réacteur 5 ml de styrène (4.5g soit 43,6 mmole), 20 mg de Triams (1.58 $10^{-5}$ mole), 4,1 mg d'azobisisobutyronitrile (AIBN) (soit 2,5 $10^{-5}$ mole) et 25,3 mg de SG1 d'une pureté de 73% (soit 6,3 $10^{-5}$ mole). Les masses théoriques visées à 100% de conversion sont donc de 150 000 g/mole pour la population issue de la triams et 50 000 g/mole pour celle produite par l'AIBN.
Le réacteur est dégazé puis mis sous agitation à 123°C. Au bout de 3,8 heures, on arrête le chauffage et on analyse le polymère obtenu (70% de conversion ont été obtenus, soit les masses théoriques atteintes de 105 000 g/mole et 35 000 g/mole). L'analyse GPC fournit un chromatogramme où sont présents deux pics bien distincts:

Premier pic: $M_{n1}$ = 34600 g/mole; $Ip_1$= 1.03.
Second pic: $M_{n2}$ = 90000 g/mole; $Ip_2$= 1.08.

**Exemple 2 (Comparatif) : Triams et AIBN sans SG1 supplémentaire.**

On reproduit la réaction précédente en omettant l'ajout de SG1. Au bout de 2 heures on a atteint 85 % de conversion. Un seul pic large (Ip = 1.5) présentant un léger épaulement vers les faible masses est obtenu.

**Exemple 3 (comparatif) : AIBN / TEMPO.**

Nous utilisons 5 ml de styrène (43 millimoles), 0,0177 g de TETRATEMPO (1,13 $10^{-5}$ mole) et 3,3 g d'AIBN ($2.10^{-5}$ mole) avec 7,3 mg de TEMPO (4,7 $10^{-5}$ mole). La procédure suivie est la même que dans l'exemple 1. On obtient après 5 heures de polymérisation un polymère dont le chromatogramme ne présente qu'un seul pic large (Ip = 1,4) avec un léger épaulement vers les hautes masses.

**Exemples 4 et 5: Synthèses de copolymères bimodaux.**

On prépare dans le réacteur le mélange d'alcoxyamines à partir des alcoxyamines Monams et diams puis on ajoute le styrène selon les compositions spécifiées dans le tableau 1. Le mélange est balayé à l'azote, puis la température est portée à 120°C et une vive agitation est maintenue. On prélève toutes les 1/2 heures un échantillon (5g) que l'on tire sous vide à 80 °C. On mesure sur chaque échantillon la conversion du styrène par extrait sec. On arrête le chauffage du réacteur à partir de 50% conversion. Une fois le mélange refroidi, on évalue de nouveau le taux de conversion en évaporant sous vide le monomère résiduel. Le polymère est ensuite analysé par GPC. A partir de 20 g de polymère obtenu dans l'étape précédente, on poursuit la polymérisation en diluant ledit polymère dans 150 g d'acrylate de butyle et on ajoute 400 mg de nitroxyde SG1 supplémentaires. Les mélanges sont dégazés et la polymérisation est poursuivie à 120 °C jusqu'à atteindre 60% de conversion environ. Les copolymères obtenus sont analysés par chromatographie d'exclusion stérique.

Tableau 1

| Exemple N° | Réactifs | | | | Copolymère final | | | | |
|---|---|---|---|---|---|---|---|---|---|
| | Monams | Diams | Styrène | Acrylate | | $Mn_1$ | $Mn_2$ | $Ip_1$ | $Ip_2$ |
| 4 | 1g 2,6 mmole | 1.06g 1,3 mmole | 100g; 0,96 mole | 150g; 1,17 mole | Bimodal | 18000 | 51000 | 1.27 | 1.07 |
| 5 | 0.5g 1,3 mmole | 0.53g 0,65 mmole | 150 g; 1,44 mole | 150 g 1,17 mole | Bimodal | 149000 | 291000 | 1.18 | 1.12 |

Pour ces exemples, le suivi de la polymérisation montre que celle-ci est bien contrôlée puisque le tracé de ln(M°/M) en fonction du temps suit très sensiblement une droite. Par ailleurs, $x_2$ étant de 2, on constate qu'effectivement, $Mn_2$ est sensiblement égal à 2 fois $Mn_1$.

**Exemples 6 à 8 : Bipopulation dont la deuxième population a le triple de la masse de la première.**

On procède comme pour les exemples 4 et 5 sauf que la diams est remplacée par la triams et que l'on utilise les quantités indiquées dans le tableau 2. Les résultats sont consignés dans le tableau 2.

Tableau 2

| Ex n° | Réactifs | | | | | | | Copolymère final | | | | |
|---|---|---|---|---|---|---|---|---|---|---|---|---|
| | Monams | Triams | Styrène | Acrylate | $x_2$ | $y_2$ | Cv | | $Mn_1$ | $Mn_2$ | Ip1 | Ip2 |
| 6 | 1g 2,6 mmole | 1,13g 0,87 mmole | 100g; 0,96 mole | 150g 1,17 mole | 3 | 1 | 50 | Bimodal | 7800 | 25360 | 1.18 | 1.21 |
| 7 | 0.5g 1,3 mmole | 0,57g 0,43 mmole | 150g; 1,44 mole | 150g 1,17 mole | 3 | 1 | 50 | Bimodal | 33888 | 111024 | 1.27 | 1.11 |
| 8 | 1g 2,6 mmole | 0.57g 0,43 mmole | 225g 2,16 mole | 150g 1,17 mole | 3 | 0.5 | 50 | Bimodal | 29252 | 108181 | 1.23 | 1.07 |

Pour ces exemples, le suivi de la polymérisation montre que celle-ci est bien contrôlée puisque le tracé de ln(M°/M) en fonction du temps suit très sensiblement une droite. Par ailleurs, $x_2$ étant de 3, on constate qu'effectivement, $Mn_2$ est sensiblement égal à 3 fois $Mn_1$.

**Exemples 9 à 11: Synthèses de polystyrènes tripopulés**

Le mélange d'alcoxyamines utilisés dans ces exemples est constitué de monams, de diams et de triams dans les proportions décrites dans le tableau 3. Le mode opératoire de polymérisation reste le même que précédemment.

Tableau 3

| Ex n° | Réactifs | | | | Copolymère final | | | | | | |
|---|---|---|---|---|---|---|---|---|---|---|---|
| | Monams | Diams | Triams | Styrène | | $Mn_1$ | $Mn_2$ | $Mn_3$ | $Ip_1$ | $Ip_2$ | $Ip_3$ |
| 9 | 1g 2,6 mmole | 1,06g 1,3 mmole | 1,13g 0,87 mmole | 150 g; 1,44 mole | Trimodal | | 15897 | | 1,57 | 1,2 | 1,3 |
| 10 | 0,5g 1,3 mmole | 0,53g 0,65 mmole | 0,57g 0,43 mmole | 225g 2,16 mole | Trimodal | 23000 | 46288 | 72000 | 1,17 | 1,1 | 1,19 |
| 11 | 0,17g 0,45 mmole | 0,18g 0,23 mmole | 0,19g 0,14 mmole | 250g 2,4 mole | Trimodal | 83408 | 256793 | 429000 | 1,4 | 1,1 | 1,1 |

Pour ces exemples, le suivi de la polymérisation montre que celle-ci est bien contrôlée puisque le tracé de ln(M°/M) en fonction du temps suit très sensiblement une droite.

**Exemple 12 : Synthèse de polyacrylate de butyle bipopulé**

Le même mode opératoire de polymérisation que dans l'exemple 4 est repris sauf que le styrène est remplacé par l'acrylate de butyle et sauf que l'on ajoute 4% en mole de nitroxyde SG1 par rapport au nombre total de fonctions nitroxyde présentes dans le mélange d'alcoxyamines de départ. La composition du mélange d'initiateur et la quantité de monomère utilisée sont résumés dans le tableau 4 (pas d'utilisation de Diams). On obtient un polyacrylate de butyle bimodal.

Tableau 4

| Ex n° | Monams | Triams | Acrylate de butyle | Conversion | $Mn_1$ | $Mn_2$ | $Ip_1$ | $Ip_2$ |
|---|---|---|---|---|---|---|---|---|
| 12 | 0,036g 0,09 mmole | 0,043g 0,03 mmole | 8,74g 68 mmole | 81% | 38900 | 116700 | 1,09 | 1,13 |

Par ailleurs, $x_2$ étant de 3, on constate qu'effectivement, $Mn_2$ est sensiblement égal à 3 fois $Mn_1$.

**Exemple 13: Synthèse d'un copolymère bipopulé de masses triples :**

Le polymère obtenu à la fin de l'exemple 7 est repris et séché sous vide puis dilué dans l'acrylate de butyle (150 g d'acrylate de butyle pour 20 g de polymère) et 150 ppm de nitroxyde libre SG1 sont ajoutés au mélange réactionnel. Le mélange est dégazé puis la polymérisation est entreprise par élévation de la température à 123°C. Au bout de 2 heures on obtient un polymère bimodal dont le premier mode a une Mw de 57000 g/mol et le second mode a une Mw de 181000 g/mole. La polydispersité du premier pic est de 1,44 tandis que le second est de polydispersité égale à 1,13.
Le caractère vivant de la polymérisation est bien confirmé par le fait que les masses des polymères de départ ont augmenté grâce à la polymérisation de l'acrylate de butyle. Le caractère nettement bimodal est clairement mis en

évidence par les spectres GPC.
Conversion: cv = 62%

**<u>Exemple 14</u> : Synthèse d'un polystyrène bipopulé de rapport de masse 8**

Selon un procédé analogue à celui des exemples 4 à 8 en utilisant un mélange de Monams et d'octopus dont les proportions sont mentionnées dans le tableau 5, on obtient après polymérisation du styrène à 120°C un polymère bipopulé présentant deux pics dont le rapport des masses moléculaires moyennes en nombre est de 8,8 (le rapport théorique $x_2$ étant de 8) avec une proportion de polymères de haute masse de 8,5% (la valeur théorique $y_2$ étant 10%).

Tableau 5

| **Ex n°** | Monams | Octopus | $x_2$ | $y_2$ | Styrène | Cv | $Mn_1$ | $Mn_2$ | Ip1 | Ip2 |
|---|---|---|---|---|---|---|---|---|---|---|
| 14 | 0,33g<br>0,86 mmole | 0,08g<br>mmole 0,015, | 8 | 0,1 | 200g<br>1,92 mole | 50% | 112300 | 990000 | 1,69 | 1,1 |

Par ailleurs, $x_2$ étant de 8, on constate qu'effectivement, $Mn_2$ est sensiblement égal à 8 fois $Mn_1$.

## Revendications

1. Composition comprenant plusieurs alcoxyamines différentes comprenant chacune l'enchaînement de formule

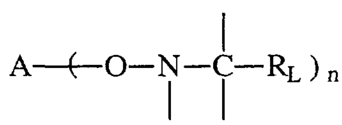

dans laquelle $R_L$ représente un radical monovalent présentant une masse molaire supérieure à 15, A représente le coeur de l'alcoxyamine, n est un nombre entier non nul, lesdites alcoxyamines présentant des valeurs de n différents.

2. Composition selon la revendication précédente, **caractérisée en ce que** les radicaux $R_L$ d'au moins deux des alcoxyamines présentent une masse molaire supérieure à 16.

3. Composition selon l'une des revendications précédentes, **caractérisée en ce que** le radical $R_L$ d'au moins une des alcoxyamines présente une masse molaire supérieure à 30.

4. Composition selon l'une des revendications précédentes, **caractérisée en ce que** les $R_L$ d'au moins deux des alcoxyamines présente une masse molaire supérieure à 30.

5. Composition selon l'une des revendications précédentes, **caractérisée en ce que** le radical $R_L$ d'au moins une des alcoxyamines présente une masse molaire comprise entre 40 et 450.

6. Composition selon l'une des revendications précédentes, **caractérisée en ce que** les radicaux $R_L$ d'au moins deux des alcoxyamines présentent une masse molaire comprise entre 40 et 450.

7. Composition selon l'une des revendications précédentes, **caractérisée en ce que** le radical $R_L$ d'au moins une des alcoxyamines comprend un groupement phosphoryle.

8. Composition selon l'une des revendications précédentes, **caractérisée en ce que** les radicaux $R_L$ d'au moins deux des alcoxyamines comprennent un groupement phosphoryle.

9. Composition selon l'une des revendications précédentes, **caractérisée en ce qu'**au moins une des alcoxyamines est telle que l'atome de carbone portant le radical $R_L$ porte également au moins un atome d'hydrogène.

10. Composition selon l'une des revendications précédentes, **caractérisée en ce qu'**au moins deux des alcoxyamines

sont telles que l'atome de carbone portant le radical $R_L$ porte également au moins un atome d'hydrogène.

**11.** Composition selon l'une des revendications précédentes, **caractérisée en ce qu'**au moins une des alcoxyamines présente une fonctionnalité de 1 et **en ce qu'**au moins un autre alcoxyamine présente une fonctionnalité d'au moins 2.

**12.** Composition selon la revendication précédente, **caractérisée en ce que** l'autre alcoxyamine présente une fonctionnalité allant de 2 à 8.

**13.** Composition selon l'une des revendications précédentes, **caractérisée en ce qu'**au moins une des alcoxyamines comprend des unités polymérisées d'au moins un monomère polymérisable par voie radicalaire.

**14.** Composition selon l'une des revendications précédentes, **caractérisée en ce qu'**au moins deux des alcoxyamines comprennent des unités polymérisées d'au moins un monomère polymérisable par voie radicalaire.

**15.** Composition selon l'une des revendications précédentes, **caractérisée en ce qu'**au moins une des alcoxyamines est préparée par réaction entre un initiateur de radicaux libres et un nitroxyde.

**16.** Composition selon la revendication précédente, **caractérisée en ce qu'**au moins une des alcoxyamines est préparée par réaction entre un initiateur de radicaux libres et un nitroxyde en présence de monomère polymérisable par voie radicalaire.

**17.** Composition selon l'une des revendications 1 à 14 **caractérisé en ce qu'**elle est un milieu de polymérisation.

**18.** Composition selon l'une des revendications 1 à 14 **caractérisé en ce qu'**elle comprend un polymère multimodal dont chaque population est lié à l'une des alcoxyamines.

**19.** Procédé de préparation d'un polymère multimodal par polymérisation radicalaire contrôlée d'au moins un monomère, ladite polymérisation étant amorcée ou se déroulant en présence d'une composition de l'une des revendications précédentes.

**20.** Procédé selon la revendication précédente, **caractérisé en ce que** la polymérisation a lieu entre 70 et 160 °C.

**21.** Procédé selon l'une des revendications précédentes de procédé, **caractérisé en ce qu'**un nitroxyde présentant l'enchaînement de formule

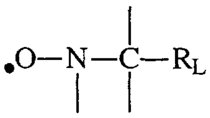

dans laquelle $R_L$ représente un radical monovalent présentant une masse molaire supérieure à 15, est ajouté au milieu de polymérisation.

**22.** Procédé selon la revendication précédente, **caractérisé en ce que** le radical $R_L$ du nitroxyde présente une masse molaire supérieure à 16.

**23.** Procédé selon l'une des revendications précédentes de procédé, **caractérisé en ce que** les conditions de polymérisation sont telles que la polymérisation mène à un polymère multimodal dont au moins l'une des populations de molécules présente une masse moléculaire moyenne en nombre allant de 10 000 à 200 000, et dont au moins une autre population de molécules présente une masse moléculaire moyenne en nombre allant de 20 000 à 2 000 000.

**24.** Procédé selon la revendication précédente, **caractérisé en ce que** les conditions de polymérisation sont telles que la polymérisation mène à un polymère multimodal dont au moins l'une des populations de molécules présente une masse moléculaire moyenne en nombre allant de 30 000 à 150 000, et dont au moins une autre population de molécules présente une masse moléculaire moyenne en nombre allant de 60 000 à 1 200 000.

Office européen des brevets

## RAPPORT DE RECHERCHE EUROPEENNE

Numéro de la demande
EP 01 10 6802

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| P,X | EP 0 992 514 A (ATOCHEM ELF SA) 12 avril 2000 (2000-04-12) | 1-14,17 | C08F4/00 C08F293/00 C08F2/38 |
| A | * revendications 1,5-8,15,16,18-21,23 * * exemple 3 * | 18-22 | |
| Y | * page 8, ligne 17-52 * --- | 13-16 | |
| Y | EP 0 135 280 A (COMMW SCIENT IND RES ORG) 27 mars 1985 (1985-03-27) * revendications 1,8,10,12 * * page 11, ligne 8-13 * * page 12, ligne 2-4 * * page 14, ligne 1 * * page 37-39 * * page 10 * --- | 13-16 | |
| X | WO 98 13392 A (HOPE PETER ;TALMA AUKE GERARDUS (NL); VERTOMMEN LUC LOUIS THEOPHIL) 2 avril 1998 (1998-04-02) * revendications 1,5,6,9,13 * --- | 1 | |
| Y | WO 00 18807 A (RIME FRANCOIS ;KRAMER ANDREAS (CH); CIBA SC HOLDING AG (CH); MUEHL) 6 avril 2000 (2000-04-06) * exemple 5B * * revendication 1 * --- | 1,7,8, 19-21 | **DOMAINES TECHNIQUES RECHERCHES (Int.Cl.7)** C08F |
| P,Y | WO 00 37508 A (CIBA SC HOLDING AG) 29 juin 2000 (2000-06-29) * revendication 17 * --- | 1,7,8, 19-21 | |
| A | US 5 498 679 A (MOFFAT KAREN A ET AL) 12 mars 1996 (1996-03-12) * revendications 1,8,10,11,14-17 * * colonne 9, ligne 18-20 * * colonne 10, ligne 32-34 * * exemple 1 * --- -/-- | 1-24 | |

Le présent rapport a été établi pour toutes les revendications

| Lieu de la recherche | Date d'achèvement de la recherche | Examinateur |
|---|---|---|
| LA HAYE | 7 mai 2001 | Rose, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen des brevets

# RAPPORT DE RECHERCHE EUROPEENNE

Numéro de la demande
EP 01 10 6802

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 877 344 A (WINTER ROLAND A E ET AL) 2 mars 1999 (1999-03-02)<br>* revendication 1 *<br>----- | 1-24 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 7 mai 2001 | Rose, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 01 10 6802

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-05-2001

| Document brevet cité au rapport de recherche | Date de publication | Membre(s) de la famille de brevet(s) | Date de publication |
|---|---|---|---|
| EP 0992514 A | 12-04-2000 | FR 2784111 A | 07-04-2000 |
| | | AU 5987899 A | 26-04-2000 |
| | | CN 1251841 A | 03-05-2000 |
| | | WO 0020469 A | 13-04-2000 |
| | | JP 2000109512 A | 18-04-2000 |
| EP 0135280 A | 27-03-1985 | AU 571240 B | 14-04-1988 |
| | | DE 3486145 A | 17-06-1993 |
| | | DE 3486145 T | 23-09-1993 |
| | | JP 1797643 C | 28-10-1993 |
| | | JP 5006537 B | 26-01-1993 |
| | | JP 60089452 A | 20-05-1985 |
| | | KR 9300892 B | 11-02-1993 |
| | | US 4581429 A | 08-04-1986 |
| | | AU 3037884 A | 17-01-1985 |
| WO 9813392 A | 02-04-1998 | AU 4773997 A | 17-04-1998 |
| | | EP 0928296 A | 14-07-1999 |
| | | JP 2001500914 T | 23-01-2001 |
| WO 0018807 A | 06-04-2000 | AU 5979499 A | 17-04-2000 |
| WO 0037508 A | 29-06-2000 | AU 1979600 A | 12-07-2000 |
| US 5498679 A | 12-03-1996 | AUCUN | |
| US 5877344 A | 02-03-1999 | AU 7918198 A | 30-12-1998 |
| | | BR 9810869 A | 26-12-2000 |
| | | CN 1259114 T | 05-07-2000 |
| | | WO 9856746 A | 17-12-1998 |
| | | EP 0988273 A | 29-03-2000 |

EPO FORM P0460

Pour tout renseignement concernant cette annexe : voir Journal Officiel de l'Office européen des brevets, No.12/82